# EUROPEAN PATENT APPLICATION

(11) **EP 4 596 249 A1**
(43) Date of publication of application: **06.08.2025**
(21) Application number: 25154746.9
(22) Date of filing: 29.01.2025
(51) Int. Cl.: B41J 2/21, H04N 1/407

(54) **IMAGE FORMING APPARATUS**

(30) Priority: 01.02.2024 JP 2024014063
(71) Applicant: KYOCERA Document Solutions Inc., Osaka-shi, Osaka, 540-8585 (JP)
(72) Inventor: MIKASHIMA, Katsuo, Osaka-shi, Osaka, 540-8585 (JP)
(74) Representative: Winter, Brandl - Partnerschaft mbB

(57) **Abstract**

An inkjet recording unit ejects ink to a sheet using plural nozzles. A line sensor scans a test pattern image printed on the sheet using the plural nozzles. The test pattern image includes a synchronization mark formed by a predetermined reference position nozzle. The line sensor includes plural sensor units that partially scan the test pattern image respectively and generate plural partial test pattern scanned images. Scanning areas of the sensor units have an overlapping section. The synchronization mark is formed so as to pass through the overlapping section. An ejection malfunction determination unit determines positions corresponding to a part of the plural nozzles in the partial test pattern scanned image on the basis of a position of the synchronization mark, and determines whether a nozzle corresponding to the determined position is an ejection malfunction nozzle or not on the basis of a density at the determined position.

## Description

### BACKGROUND

### 1. FIELD OF THE PRESENT INVENTION

The present invention relates to an image forming apparatus.

### 2. DESCRIPTION OF THE RELATED ART

An inkjet-type image forming apparatus forms a thin line using each nozzle and thereby prints a test pattern on a print sheet, scans the printed test pattern using a line sensor while transporting the print sheet, and if a density defect occurs on the thin line in a scanned image of the test pattern, determines that ink ejection malfunction occurs on a nozzle corresponding to the thin line. In this process, the image forming apparatus includes a synchronization mark into the test pattern, forms the synchronization mark using a predetermined nozzle, and determines a nozzle corresponding to a thin line on the basis of a relative position of the thin line from the synchronization mark in the scanned image of the test pattern.

In order to inexpensively install the line sensor to scan the test pattern image as mentioned, used is a line sensor in which plural sensor units (contact image sensors or the like) of a standardized width are arranged.

When the line sensor that includes plural sensor units is used as mentioned, if the synchronization mark passes through a gap between scanning areas of two sensor units adjacent to each other when the test pattern image is scanned using the line sensor, the synchronization mark may not be properly scanned.

### SUMMARY

An image forming apparatus according to the present invention includes an inkjet recording unit, a sheet transportation unit, a line sensor, and an ejection malfunction determination unit. The inkjet recording unit is configured to eject ink to a sheet using arranged plural nozzles and perform printing. The sheet transportation unit is configured to transport the sheet. The line sensor is configured to scan a test pattern image printed on the sheet using the plural nozzles and generate a test pattern scanned image. The ejection malfunction determination unit is configured to determine whether each nozzle among the plural nozzles is an ejection malfunction nozzle or not on the basis of a density distribution of the test pattern scanned image corresponding to this nozzle. The test pattern image includes a synchronization mark formed by a predetermined reference position nozzle among the plural nozzles. The line sensor includes plural sensor units; and the plural sensor units partially scan the test pattern image respectively as the test pattern scanned image, and generate plural partial test pattern scanned images, respectively. Scanning areas of the plural sensor units have an overlapping section in a perpendicular direction to a transportation direction of the sheet. The synchronization mark is formed such that the synchronization mark passes through the overlapping section. The ejection malfunction determination unit (a) determines positions corresponding to a part of the plural nozzles in the partial test pattern scanned image on the basis of a position of the synchronization mark in the partial test pattern scanned image, and (b) determines whether a nozzle corresponding to the determined position is an ejection malfunction nozzle or not on the basis of a density at the determined position.

These and other objects, features and advantages of the present invention will become more apparent upon reading of the following detailed description along with the accompanied drawings.

### BRIEF DESCRIPTION OF THE DRAWINGS

Fig. 1 shows a side view that indicates an internal mechanical configuration of an image forming apparatus in an embodiment according to the present invention;
Fig. 2 shows a front view diagram that indicates a line sensor 41 shown in Fig. 1;
Fig. 3 shows a block diagram that indicates an electronic configuration of the image forming apparatus 10 in the embodiment according to the present invention;
Fig. 4 shows a diagram that indicates an example of a test pattern image;
Fig. 5 shows a diagram that explains a position of a primary-scanning-directional synchronization mark 203 in the test pattern image 201 shown in Fig. 4;
Fig. 6 shows a diagram that indicates a part 201a scanned by a sensor unit 51a among the test pattern shown in Figs. 4 and 5;
Fig. 7 shows a diagram that indicates a part 201b scanned by a sensor unit 51b among the test pattern shown in Figs. 4 and 5;
Fig. 8 shows a diagram that indicates an example of a partial test pattern scanned image generated by the sensor unit 51a as shown in Figs. 5 and 6;
Fig. 9 shows a diagram that indicates an example of a partial test pattern scanned image generated by the sensor unit 51b as shown in Figs. 5 and 7; and
Fig. 10 shows a diagram that indicates an example of a color adjustment chart.

### DETAILED DESCRIPTION

Hereinafter, an embodiment according to the present invention will be explained with reference to drawings.

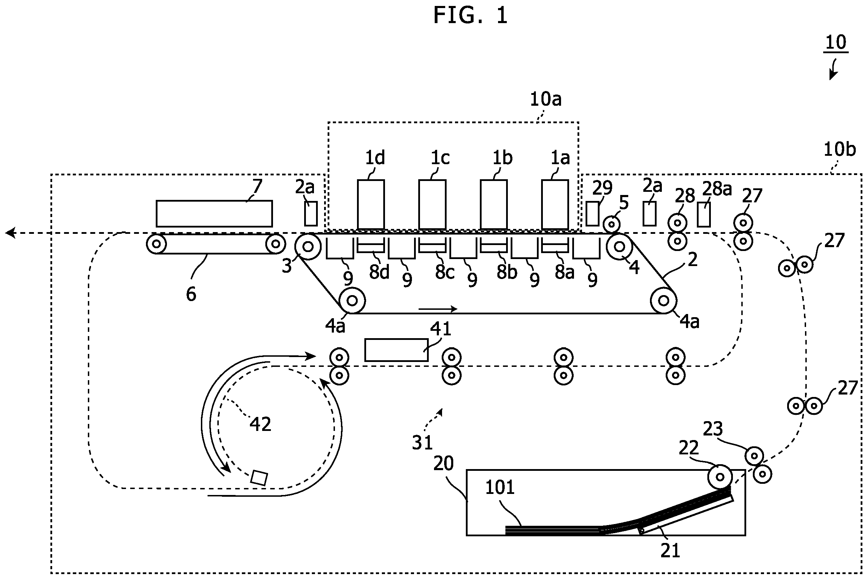

Fig. 1 shows a side view that indicates an internal mechanical configuration of an image forming apparatus in an embodiment according to the present invention. The image forming apparatus 10 in this embodiment is an apparatus such as printer, copier, facsimile machine or multi function peripheral, and includes an inkjet color printing mechanism of a line head type in this embodiment.

The image forming apparatus 10 shown in Fig. 1 includes a print engine 10a and a sheet transportation unit 10b. The print engine 10a physically prints an image to be printed on a print sheet (print paper sheet or the like). An ink cartridge is enabled to be mounted and demounted to and from the print engine 10a, and the print engine 10a performs printing using ink supplied from the ink cartridge. Further, the sheet transportation unit 10b transports the print sheet along a transportation path.

In this embodiment, the print engine 10a includes line-head-type inkjet recording units 1a to 1d corresponding to four ink colors: Cyan, Magenta, Yellow, and Black. Each of the inkjet recording units 1a to 1d ejects ink of a corresponding color using plural arranged nozzles to a print sheet 101 and thereby performs printing.

Further, in this embodiment, the sheet transportation unit 10b includes (a) a circular-type transportation belt 2 that is arranged so as to be opposite to the print engine 10a and transports a print sheet, (b) a driving roller 3, a driven roller 4, and a tension roller 4a around which the transportation belt 2 is hitched, (c) a nipping roller 5 that nips the print sheet with the transportation belt 2, (d) a post-stage transportation belt 6, and (e) a dryer 7.

The driving roller 3, the driven roller 4, and the tension roller 4a cause the transportation belt 2 to rotate. The nipping roller 5 nips an incoming print sheet transported from a sheet feeding cassette 20 mentioned below, and the nipped print sheet is transported by the transportation belt 2 to printing positions of the inkjet recording units 1a to 1d in turn, and on the print sheet, images of respective colors are printed by the inkjet recording units 1a to 1d. In this situation, the passing print sheet is detected by a sheet sensor 2a, and a current position of the print sheet on a transportation path is determined on the basis of a detection timing by the sheet sensor 2a, and thereby an image is printed at a proper position on the print sheet. Subsequently, the print sheet after printing is outputted by the post-stage transportation belt 6 to an output tray or the like. In this process, the print sheet on which the ink has been ejected is dried by the dryer 7.

Meanwhile, ink receiver units 8a to 8d are installed under the inkjet recording units 1a to 1d. Flushing (line flushing) of each inkjet recording unit 1a, 1b, 1c, or 1d is performed when any flushing opening part is located at a position right under the inkjet recording unit 1a, 1b, 1c, or 1d in accordance with a flushing timing signal; and ink is ejected in line from the inkjet recording unit 1a, 1b, 1c, or 1d for the flushing, passes through the flushing opening part, is received by the corresponding ink receiver unit 8a, 8b, 8c, or 8d, and thereafter is collected to a waste ink tank.

The flushing timing signal is a signal that specifies flushing timings to the inkjet recording units 1a to 1d, and the control unit 81 generates the flushing timing signal on the basis of a position of the transportation belt 2 determined from a sensor signal generated by a belt sensor 29.

Further, sheet suction units 9 are arranged along the transportation path of the print sheet, in a part (whole part) other than the ink received units 8a to 8d. A negative pressure is applied to the sheet suction units 9, and thereby the print sheet is adsorbed to the transportation belt 2. It should be noted that a lower negative pressure is applied to the ink receiver units 8a to 8d, than that applied to the sheet suction units 9.

Further the sheet transportation unit 10b includes a sheet feeding cassette 20 as a sheet supply source. The sheet feeding cassette 20 stores print sheets 101, and pushes up the print sheets 101 using a lift plate 21 so as to cause the print sheets 101 to contact with a pickup roller 22. The print sheets 101 put on the sheet feeding cassette 20 are picked up to a sheet feeding roller 23 by the pickup roller 22 sheet by sheet from the upper side. The sheet feeding roller 23 is a roller that transports the print sheets 101 sheet by sheet fed by the pickup roller 22 from the sheet feeding cassette 20 onto a transportation path.

A transportation roller 27 is a roller to transport the print sheet 101 on a predetermined transportation path. A registration roller 28 temporarily stops the print sheet 101 when the incoming print sheet 101 in transportation is detected by a registration roller 28a, and transports this print sheet 101 to the print engine 10a (specifically, at a nipping position of the nipping roller 5 and the transportation belt 2) at a secondary sheet feeding timing. The secondary sheet feeding timing is specified by a control unit 81 mentioned below such that an image is formed at a position specified on the print sheet 101.

Further, the sheet transportation unit 10b includes a circulation sheet transportation unit 31. When performing duplex printing or the like, the circulation sheet transportation unit 31 returns a print sheet from a predetermined position in a downstream side of the print engine 10a to a predetermined position in an upstream side of the print engine 10a.

As shown in Fig. 1, the circulation sheet transportation unit 31 includes a line sensor 41 and a switch back transportation path 42.

The line sensor 41 is installed at a predetermined position in a transportation path of the circulation sheet transportation unit 31 (at a position in a downstream side of the switch back transportation path 42) and optically scans an image of a print sheet 101 that passes through the transportation path.

In particular, in detection operation of an ejection malfunction nozzle, the line sensor 41 scans a test pattern image mentioned below on the print sheet 101 that is transported and passes through a scanning position of the line sensor 41, and generates a test pattern scanned image.

The test pattern image is an image printed on the print sheet 101 using plural nozzles in the inkjet recording unit 1a, 1b, 1c or 1d, and here, includes thin lines (lines of 1-dot width along a secondary scanning direction) respectively formed by nozzles other than an ejection malfunction nozzle among plural nozzles as test targets.

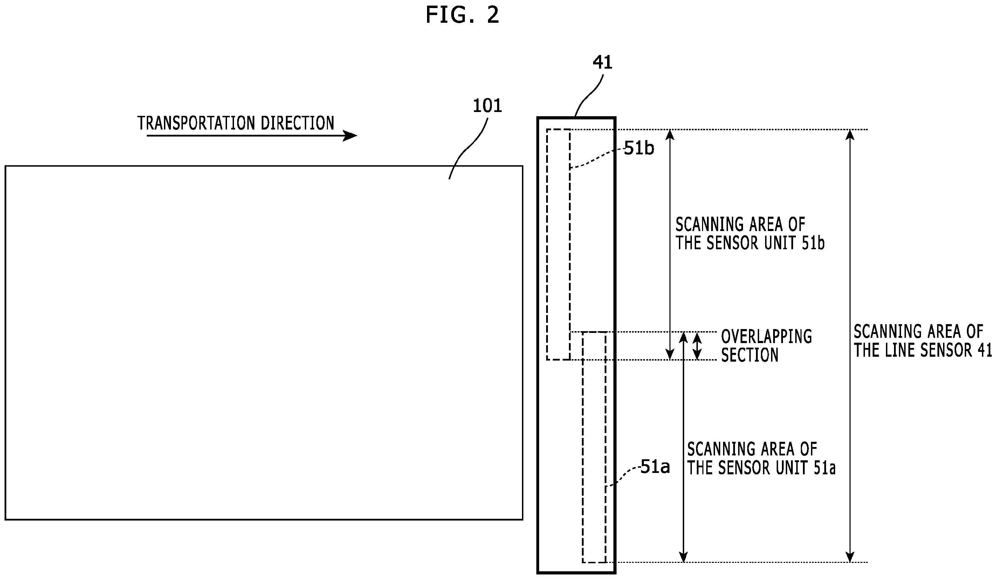

Fig. 2 shows a front view diagram that indicates a line sensor 41 shown in Fig. 1. The line sensor 41 includes plural sensor units 51a and 51b. Here, the sensor units 51a and 51b are CISes (Contact Image Sensors). Each of the sensor units 51a and 51b includes imaging elements 1-dimensionally arranged, and is arranged along a perpendicular direction to a transportation direction of the print sheet 101. Further, the plural sensor units 51a and 51b partially scan the test pattern image respectively, and thereby generate plural partial test pattern scanned images respectively, and scanning areas of the plural sensor units 51a and 51b have an overlapping section in a perpendicular direction to a transportation direction of the sheet as shown in Fig. 2.

Here, a width of the overlapping section is wider than a maximum value of a positional deviation in a perpendicular direction to a transportation direction of the print sheet 101 in transportation.

Meanwhile, the switch back transportation path 42 reverses a movement direction of the print sheet in order to change a surface that should face the print engine 10a from the first surface to the second surface of the print sheet.

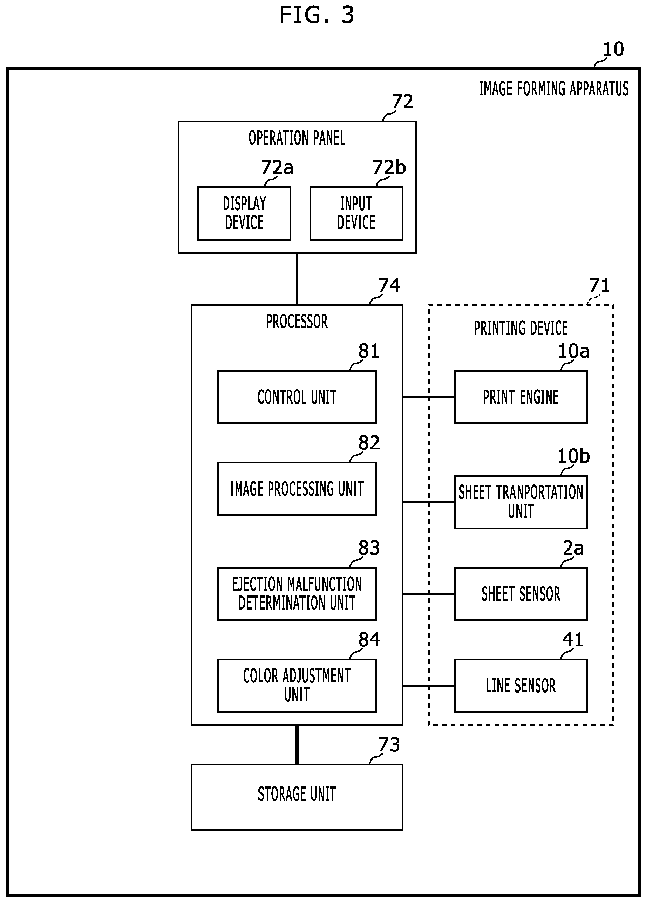

Fig. 3 shows a block diagram that indicates an electronic configuration of the image forming apparatus 10 in the embodiment according to the present disclosure. As shown in Fig. 3, the image forming apparatus 10 includes not only a printing device 71 that includes the mechanical configuration shown in Figs. 1 and 2 but an operation panel 72, a storage device 73 and a processor 74.

The operation panel 72 is arranged on a housing surface of the image forming apparatus 10, and includes a display device 72a such as a liquid crystal display and an input device 72b such as a hard key and/or a touch panel, and displays sorts of messages for a user using the display device 72a and receives a user operation using the input device 72b.

The storage device 73 is a non-volatile storage device (flash memory, hard disk drive or the like) in which data, a program and the like have been stored that are required for control of the image forming apparatus 10.

The processor 74 includes a computer that acts in accordance with a program, an ASIC (Application Specific Integrated Circuit) that performs a predetermined action, and/or the like, and acts as sorts of processing units using the computer, the ASIC and/or the like. This computer includes a CPU (Central Processing Unit), a ROM (Read Only Memory), a RAM (Random Access Memory) and the like, and loads a program stored in the storage device 73, the ROM or the like to the RAM and executes the program using the CPU and thereby acts as processing units (with the ASIC if required).

Here, the processor 74 acts as a control unit 81, an image processing unit 82, an ejection malfunction determination unit 83, and a color adjustment unit 84.

The control unit 81 controls the image outputting unit 71 (the print engine 10a, the sheet transportation unit 10b and the like), and thereby performs a print job requested by a user. In this embodiment, the control unit 81 causes the image processing unit 82 to perform a predetermined image process, and controls the print engine 10a and causes it to eject ink and thereby forms a print image on a print sheet. The image processing unit 82 performs a predetermined image process such as RIP (Raster Image Processing), color conversion, halftoning and/or the like for image data of a printing image.

Specifically, the control unit 81 causes the print engine 10a to print a user document image based on printing image data specified by a user, and forms a test pattern image on a single print sheet 101 in order to detect an ejection malfunction nozzle.

For example, if a line sensor is used as the sheet sensor 2a, and the control unit 81 detects a range (positions of both side edges) of the print sheet 101 in a perpendicular direction to the transportation direction using the sheet sensor 2a, and forms the test pattern image on the print sheet 101, then a nozzle outside of the range of the print sheet 101 in the perpendicular direction is excluded from test targets mentioned below. Consequently, ink is not ejected to the outside of the print sheet 101. Thus, in the test pattern image, the control unit 81 masks a part corresponding nozzles outside of the range of the print sheet 101.

The ejection malfunction determination unit 83 controls the line sensor 41 and thereby acquires the test pattern scanned image from the line sensor 41; and for each nozzle among plural nozzles as test targets in the inkjet recording unit 1a, 1b, 1c or 1d for each ink color, the ejection malfunction determination unit 83 determines whether the nozzle is an ejection malfunction nozzle or not (whether the nozzle is a non ejection nozzle) on the basis of a density corresponding the nozzle in a density distribution of the test pattern scanned image. A relationship between the nozzle and a position in the test pattern scanned image is determined on the basis of a synchronization mark included in the test pattern image, as mentioned below.

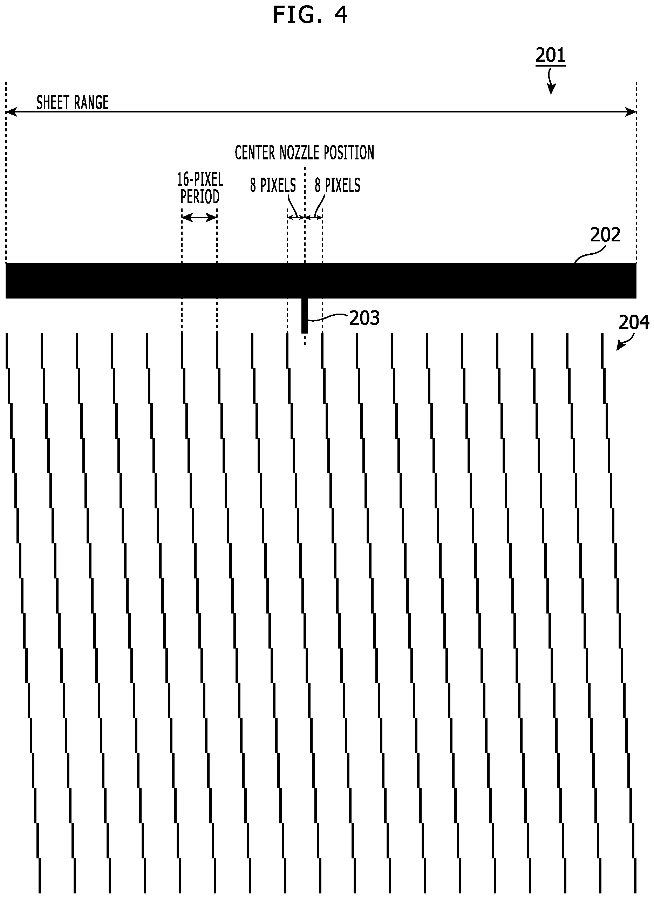

Fig. 4 shows a diagram that indicates an example of a test pattern image. As shown in Fig. 4, for example, a test pattern image 201 includes a secondary-scanning-directional synchronization mark 202, a primary-scanning-directional synchronization mark 203, and a thin line 204.

The test pattern image 201 is printed individually by each of the inkjet recording units 1a to 1d. For example, as shown in Fig. 4, the control unit 81 controls each of the inkjet recording units 1a to 1d such that the thin line 204 is printed by each of nozzles as test targets, and if ejection malfunction does not occur on a nozzle as a test target, the thin line 204 is printed without any defects.

Each of the thin lines 204 in Fig. 4, for example, is a straight-line-shaped image formed by a single nozzle. As shown in Fig. 4, for example, thin lines formed by two nozzles adjacent to each other are formed so as not to connect each other in the primary scanning direction (for example, formed at different positions in the secondary scanning direction); and at each secondary-scanning-directional position, plural thin lines 204 are formed with a predetermined period (in Fig. 4, 16-pixel period) along the primary scanning direction.

Further, the secondary-scanning-directional synchronization mark 202 is an image that includes a formation beginning position of the thin line 204 in the secondary scanning direction, is also a solid image with a band shape of plural lines along the primary scanning direction, and is formed by plural nozzles as test targets.

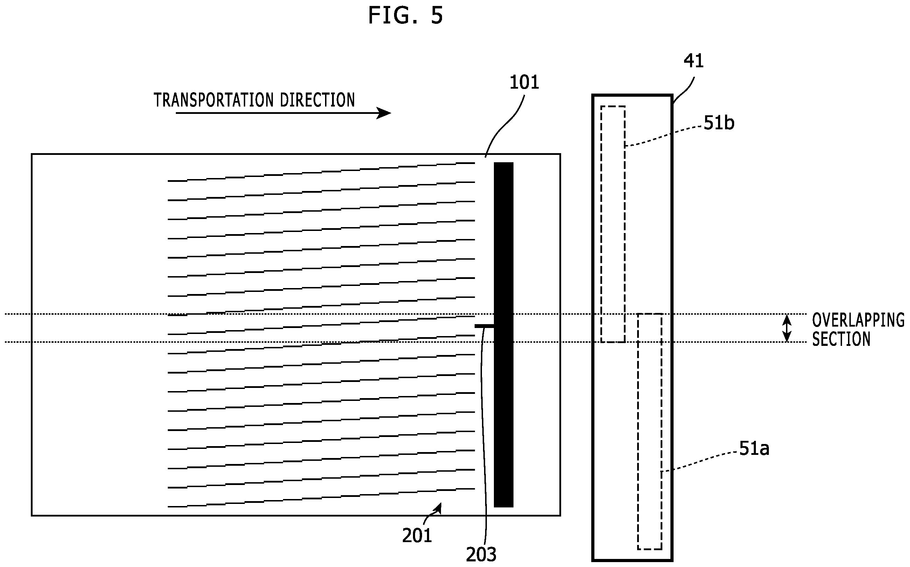

Fig. 5 shows a diagram that explains a position of a primary-scanning-directional synchronization mark 203 in the test pattern image 201 shown in Fig. 4. The primary-scanning-directional synchronization mark 203 is a straight-line-shaped image formed by a predetermined reference position nozzle among nozzles as test targets. The reference position nozzle may be a single nozzle or may be plural nozzles continuously arranged in the primary scanning direction. Here, the reference position nozzle(s) is/are one or plural center nozzles in a nozzle range in the primary scanning direction of each of the inkjet recording units 1a to 1d. Further, the primary-scanning-directional synchronization mark 203 is formed on the print sheet 101 so as to pass through the aforementioned overlapping section as shown in Fig. 5, for example. It should be noted that the primary-scanning-directional synchronization mark 203 is formed so as not to connect any of the thin lines 204.

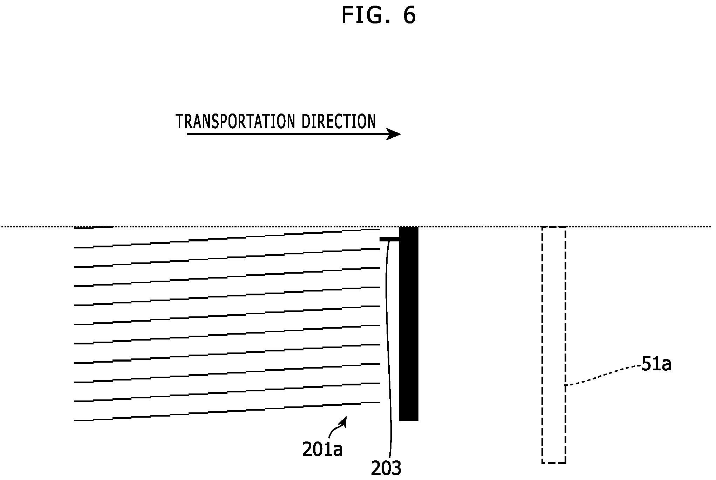

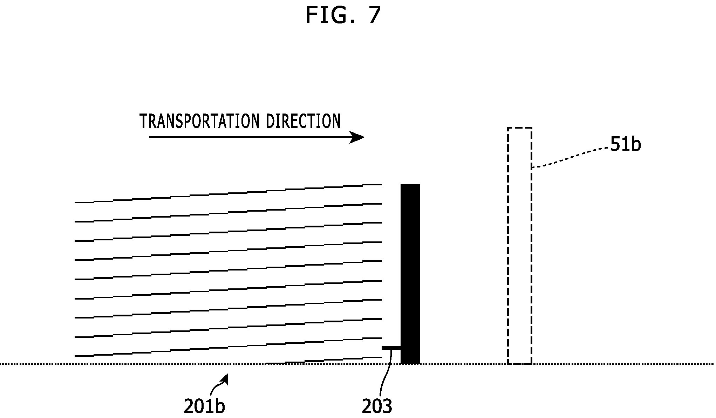

Fig. 6 shows a diagram that indicates a part 201a scanned by a sensor unit 51a among the test pattern shown in Figs. 4 and 5. Fig. 7 shows a diagram that indicates a part 201b scanned by a sensor unit 51b among the test pattern shown in Figs. 4 and 5.

As shown in Figs. 6 and 7, the plural sensor units 51a and 51b scan parts 201a and 201b in the test pattern image 201 and thereby generate plural partial test pattern scanned images, respectively. Here, any one of the partial test pattern scanned images by the plural sensor units 51a and 51b includes the secondary-scanning-directional synchronization mark 202 and the primary-scanning-directional synchronization mark 203.

Further, the ejection malfunction determination unit 83 (a) determines positions corresponding to a part (i.e. partial nozzles) of the aforementioned plural nozzles in the partial test pattern scanned image on the basis of a position of the primary-scanning-directional synchronization mark 203 in each of the partial test pattern scanned images, and (b) determines whether a nozzle corresponding to the determined position is an ejection malfunction nozzle or not on the basis of a density at the determined position.

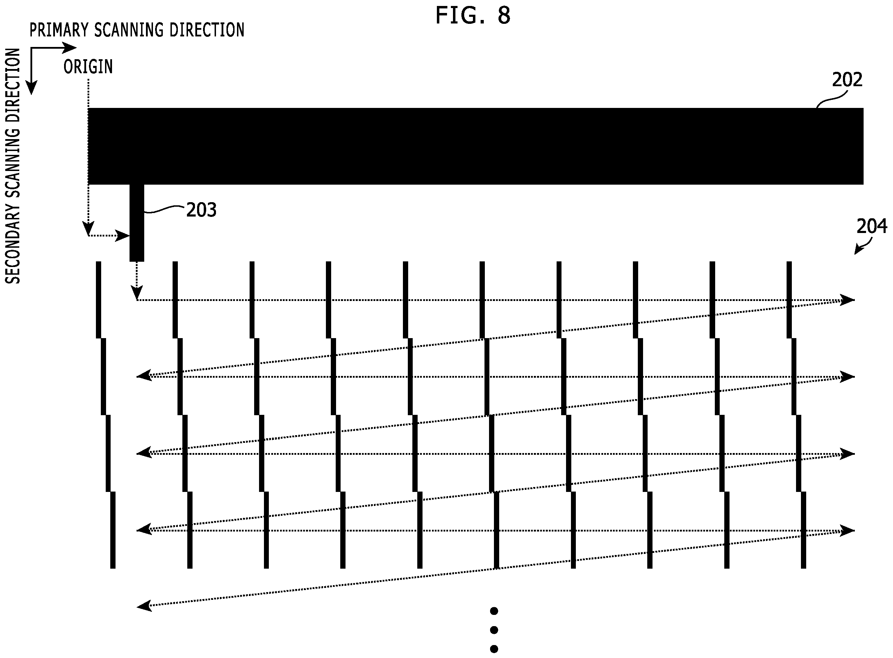

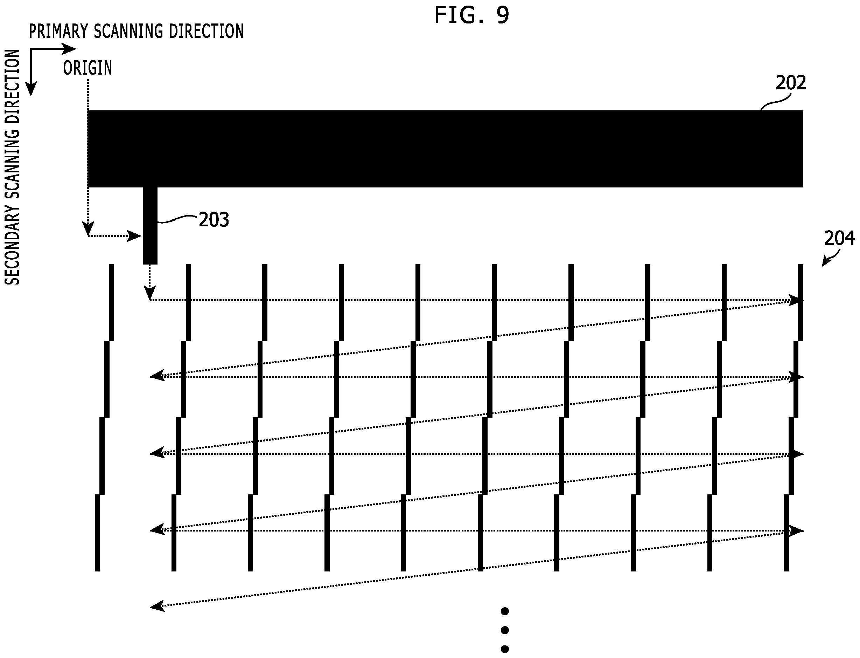

Fig. 8 shows a diagram that indicates an example of a partial test pattern scanned image generated by the sensor unit 51a as shown in Figs. 5 and 6. Fig. 9 shows a diagram that indicates an example of a partial test pattern scanned image generated by the sensor unit 51b as shown in Figs. 5 and 7.

As shown in Figs. 8 and 9, for example, each of the partial test pattern scanned images is generated with an origin such that the origin is located at an end part corresponding to the overlapping section in the primary scanning direction. In other words, one of the partial test pattern scanned images (here, the partial test pattern scanned image shown in Fig. 9) is generated with the reversed primary scanning direction. Further, in this embodiment, as shown in Figs. 8 and 9, for example, the ejection malfunction determination unit 83 searches for the primary-scanning-directional synchronization mark 203 and the thin lines 204 along the primary scanning direction from the origin, in each of the plural partial test pattern scanned images.

Specifically, as shown by broken lines depicted in Figs. 8 and 9, in the partial test pattern scanned image, when the secondary-scanning-directional synchronization mark 202 is detected, searching for the primary-scanning-directional synchronization mark 203 is performed along the primary scanning direction at a position apart by a predetermined lines from a position of the detected mark 202; and thereby a position of the primary-scanning-directional synchronization mark 203 (a center position of the mark 203 in the primary scanning direction) is determined, and searching for the thin lines 204 is performed along the primary scanning direction from the primary-scanning-directional synchronization mark 203 at each of secondary-scanning-directional positions determined from the secondary-scanning-directional synchronization mark 202 as a reference in the secondary scanning direction.

Further, in the partial test pattern scanned image, a position at which each nozzle has to form the thin line 204 is determined on the basis of a position of the primary-scanning-directional synchronization mark 203 as a reference, and if a density at the determined position is equal to or larger than a predetermined threshold value, then it is determined that ejection malfunction does not occur on this nozzle and contrarily if the density at the determined position is less than the predetermined threshold value, then it is determined that ejection malfunction occurs on this nozzle.

When the thin lines 204 are formed as shown in Fig. 4, for example, if ejection malfunction does not occur, then as shown in Fig. 8, the thin lines 204 are formed with 16-pixel intervals from a starting position that is a position apart by 8 pixels from the center position of the primary-scanning-directional synchronization mark 203. Assuming that the reference position nozzle (center nozzle) is the N-th nozzle, an ejection malfunction test is performed on the basis of densities at pixel positions (N+8+16*m (m=0, 1, 2, ...)). Therefore, at once of scanning in the primary scanning direction, the ejection malfunction test is performed for nozzles of about one-sixteenth of the test target nozzles. After the test is finished, in next scanning in the primary scanning direction at a position apart by a predetermined lines in the secondary scanning direction, the ejection malfunction test is performed as well for nozzles of about one-sixteenth of the test target nozzles. In this scanning, positions of the thin lines 204 are shifted by one pixel in the primary scanning direction; and therefore, in the partial test pattern scanned image shown in Fig. 8, the ejection malfunction test is performed on the basis of densities at pixel positions (N+9+16*m), and in the partial test pattern scanned image shown in Fig. 9, the ejection malfunction test is performed on the basis of densities at pixel positions (N+7+16*m). In the aforementioned manner, the scanning is performed 16 times, and thereby, the test is performed for all nozzles as test targets corresponding to the test pattern image.

As mentioned, the end part corresponding to the overlapping section is set as the origin of the partial test pattern scanned image, and therefore, the test can be performed by the same process for any of the test pattern scanned images except that offset amounts are different of the starting positions of plural times of the scanning.

As mentioned, upon determining the range of the print sheet 101, the control unit 81 determines a nozzle range corresponding to the determined range, and excludes a nozzle outside of the determined nozzle range from the test targets. Here, the control unit 81 stores data of the nozzle range in the storage device 73, the RAM or the like, and the ejection malfunction determination unit 83 reads the data and thereby determines the nozzle range of the test targets, and performs determination of whether ejection malfunction occurs or not on only nozzles in the nozzle range of the test targets, but does not perform the determination on the other nozzles.

Returning to Fig. 3, the color adjustment unit 84 performs color adjustment (chromatic aberration correction, gamma correction of each color of RGB, and/or the like) of the line sensor 41. In the color adjustment, a predetermined color adjustment chart for the color adjustment is used.

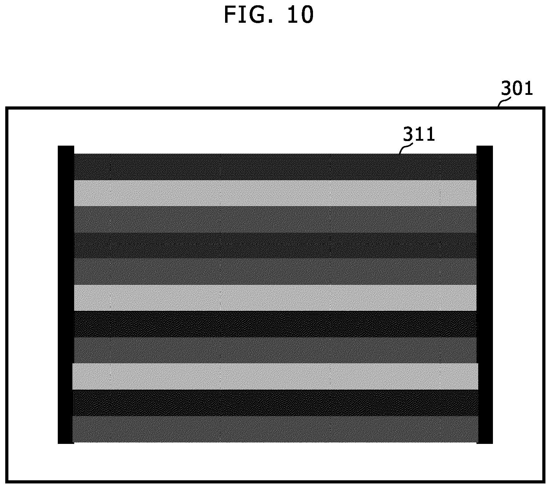

Fig. 10 shows a diagram that indicates an example of a color adjustment chart. As shown in Fig. 10, the color adjustment chart 301 is a sheet on which plural color patch images 311 have been printed in advance. For chromatic aberration correction, the plural color patch images 311 have the same constant lengths in the primary scanning direction. Further, for gamma correction, for one color, plural color patch images 311 corresponding to plural gradation levels are used.

In the color adjustment, the color adjustment chart is set on the feeding cassette 20, an unshown manual bypass tray or the like, and the sheet transportation unit 10b transports the color adjustment chart 301 along the transportation path. The color adjustment unit 84 causes the color adjustment chart 301 to pass without causing the print engine 10a to operate, and performs the color adjustment on the basis of a scanned image generated of the color adjustment chart 301 by the line sensor 41. In this process, the aforementioned sensor units 51a and 51b partially scan the color adjustment chart 301 respectively and generate plural partial color adjustment chart scanned images, respectively. Each of the plural partial color adjustment chart scanned images is generated with an origin such that the origin is located at an end part corresponding to the overlapping section in a primary scanning direction, as well as the aforementioned partial test pattern scanned image. Further, the color adjustment unit 84 individually performs color adjustment of the plural sensor units 51a and 51b along the primary scanning direction from the origin toward another end of the partial color adjustment chart scanned image, in each of the partial color adjustment chart scanned images.

If a width of the color adjustment chart 301 is narrower than a scanning area of the line sensor 41, then for a part of the line sensor 41 through which the color adjustment chart 301 does not pass, a correction characteristic (correction characteristic(s) of chromatic aberration correction, gamma correction and/or the like) of the color adjustment obtained as mentioned may be extrapolated and then applied.

The following part explains a behavior of the image forming apparatus 10.

### (a) Determination of an ejection malfunction nozzle

Using the control unit 81, the ejection malfunction determination unit 83 causes the image outputting unit 71 to print a test pattern image 201 on a print sheet 101.

The print sheet 101 on which the test pattern image has been printed is transported by the circulation sheet transportation unit 31, switched back by the switch back transportation path 42, and thereby it is transported to a scanning position of the line sensor 41.

Each of the sensor units 51a and 51b of the line sensor 41 partially optically scans the test pattern image on the print sheet 101 and thereby generates a partial test pattern scanned image.

Subsequently, the ejection malfunction determination unit 83 detects the synchronization marks 202 and 203 in each of the generated partial test pattern scanned images; determines a position at which a thin line 204 has to be formed by each nozzle, correspondingly to positions of the synchronization marks 202 and 203; and determines whether ejection malfunction occurs on this nozzle or not on the basis of a density at this position.

Further the ejection malfunction determination unit 83 stores into the storage device 73 ejection malfunction nozzle data (nozzle number or the like) that indicates the detected ejection malfunction nozzle.

As mentioned, the ejection malfunction nozzle is determined. The print sheet 101 on which the test pattern image has been printed is outputted to an output tray or the like by the sheet transportation unit 10b.

### (b) Behavior for printing

When receiving a print request, the control unit 81 causes the image processing unit 82 to perform an image process for an image specified by the print request, and thereby acquires image data of the image to be printed; and causes the image outputting unit 71 to transport a print sheet and print the image to be printed on the print sheet on the basis of the image data.

The control unit 81 reads the ejection malfunction nozzle data from the storage device 73 and determines an ejection malfunction nozzle before starting the printing; and upon detecting a position (a position in a perpendicular to the transportation direction) of a print sheet using the sheet sensor 2a or the like, (a) determines a nozzle corresponding to each pixel in the aforementioned image, (b) determines correction target nozzles used for the aforementioned image, and (c) performs the correction process for the correction target nozzles. In this correction process, for example, image data (pixel value) of a pixel corresponding to an ejection malfunction nozzle is corrected to a value of non ink ejection, and image data (pixel value) of a pixel adjacent to the ejection malfunction nozzle is corrected such that a density of this pixel is increased.

As mentioned, in the aforementioned embodiment, the test pattern image 201 for an ejection malfunction test of plural nozzles in the inkjet recording unit 1a, 1b, 1c or 1d includes the synchronization mark 203 formed by a predetermined reference position nozzle among the plural nozzles. The line sensor 41 includes the plural sensor units 51a and 51b, and the plural sensor units 51a and 51b partially scan the test pattern image 201 and thereby generate plural partial test pattern scanned images, respectively. Scanning areas of the plural sensor units 51a and 51b have an overlapping section in a perpendicular direction to a transportation direction of a print sheet 101, the synchronization mark 203 is formed on the print sheet 101 such that the synchronization mark passes through the overlapping section, and the ejection malfunction determination unit 83 (a) determines positions corresponding to a part of the plural nozzles in the partial test pattern scanned image on the basis of a position of the synchronization mark 203 in the partial test pattern scanned image, and (b) determines whether a nozzle corresponding to the determined position is an ejection malfunction nozzle or not on the basis of a density at the determined position.

Consequently, any one of the partial test pattern scanned images includes the synchronization mark 203 and therefore the synchronization mark 203 is properly scanned for synchronization between the test pattern image (thin lines 204) and the nozzles. Therefore, on the basis of any one of the partial test pattern scanned images, the nozzle test is properly performed on the basis of the partial test pattern scanned image.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in the aforementioned embodiment, the line sensor 41 1 includes two sensor units 51a and 51b. Alternatively, the number of the sensor units may be any one of multiples of 2.

Further, in the aforementioned embodiment, the aforementioned nozzle ranges may be determined and stored at plural positions of the print sheet 101 (for example, a front end part, a center part and a rear end part of the print sheet 101) along the transportation direction using the sheet sensor 2a, and on the basis of the stored nozzle ranges, the nozzles range as the test targets may be changed correspondingly to a secondary-scanning-directional position of the test pattern image.

Furthermore, in the aforementioned embodiment, a mechanism to intentionally give a positional deviation to the print sheet 101 in a perpendicular direction to the transportation direction; and if a width of the print sheet 101 is narrower than a nozzle range of all the nozzles (for example, the print sheet 101 has an A4 size but the nozzle range of all the nozzles is 12 inches), then as the aforementioned test the test may be performed twice such that in the first test the print sheet 101 is shifted using the mechanism to include one of ends of the nozzle range of all the nozzles within a range of the print sheet 101 and in the second test the print sheet 101 is shifted using the mechanism to include the other end of the nozzle range of all the nozzles within a range of the print sheet 101.

Furthermore, in the aforementioned embodiment, if plural sheet feeding cassettes 20 are installed and plural sizes of print sheets are available, then a print sheet of the largest size may be used for the aforementioned test (i.e. used for printing of the test pattern image). In addition, in such a case, a print sheet of a size specified by a user may be used for the test.

Furthermore, in the aforementioned embodiment, if plural output destinations of the print sheet are installed, then a print sheet used for the aforementioned test may be output to an output destination (e.g. specific tray such as proof tray) other than an output destination for a print product of a print job of a user.

Furthermore, in the aforementioned embodiment, if a head capping mechanism is installed of the inkjet recording units 1a to 1d, when transporting the color adjustment chart 301, the control unit 81 may control the head capping mechanism to cause the color adjustment chart 301 to pass through the print engine 10a of which heads of the inkjet recording units 1a to 1d are capped. In such a case, restrained is degradation of the color adjustment chart 301 due to contact with the heads of the inkjet recording units 1a to 1d. Further, the control unit 81 may output the color adjustment chart 301 so as not to cause the dryer 7 to operate. In such a case, restrained is degradation of the color adjustment chart 301 due to heat of the dryer 7.

## Claims

1. An image forming apparatus, comprising:
an inkjet recording unit configured to eject ink to a sheet using arranged plural nozzles and perform printing;
a sheet transportation unit configured to transport the sheet;
a line sensor configured to scan a test pattern image printed on the sheet using the plural nozzles and generate a test pattern scanned image; and
an ejection malfunction determination unit configured to determine whether each nozzle among the plural nozzles is an ejection malfunction nozzle or not on the basis of a density distribution of the test pattern scanned image corresponding to this nozzle;
wherein the test pattern image includes a synchronization mark formed by a predetermined reference position nozzle among the plural nozzles;
the line sensor comprises plural sensor units;
the plural sensor units partially scan the test pattern image respectively as the test pattern scanned image, and generate plural partial test pattern scanned images, respectively;
scanning areas of the plural sensor units have an overlapping section in a perpendicular direction to a transportation direction of the sheet;
the synchronization mark is formed such that the synchronization mark passes through the overlapping section; and
the ejection malfunction determination unit (a) determines positions corresponding to a part of the plural nozzles in the partial test pattern scanned image on the basis of a position of the synchronization mark in the partial test pattern scanned image, and (b) determines whether a nozzle corresponding to the determined position is an ejection malfunction nozzle or not on the basis of a density at the determined position.

2. The image forming apparatus according to claim 1, wherein a width of the overlapping section is wider than a maximum value of a positional deviation in a perpendicular direction to a transportation direction of the sheet.

3. The image forming apparatus according to claim 1, wherein the test pattern image includes a thin line formed by a nozzle other than an ejection malfunction nozzle among the plural nozzles;
the plural partial test pattern scanned images are generated with an origin such that the origin is located at an end part corresponding to the overlapping section in a primary scanning direction; and
the ejection malfunction determination unit searches for the synchronization mark and the thin line along the primary scanning direction from the origin, in each of the plural partial test pattern scanned images.

4. The image forming apparatus according to claim 1, further comprising a color adjustment unit configured to perform color adjustment of the line sensor;
wherein the sheet transportation unit transports a color adjustment chart;
the color adjustment unit performs the color adjustment on the basis of a scanned image of the color adjustment chart, the scanned image generated by the line sensor;
the plural sensor units partially scan the color adjustment chart respectively and generate plural partial color adjustment chart scanned images, respectively;
the plural partial color adjustment chart scanned images are generated with an origin such that the origin is located at an end part corresponding to the overlapping section in a primary scanning direction; and
the color adjustment unit individually performs color adjustment of the plural sensor units along the primary scanning direction from the origin toward another end of the partial color adjustment chart scanned image, in each of the partial color adjustment chart scanned images.
